# EUROPEAN PATENT SPECIFICATION

(11) **EP 1 234 517 B1**
(45) Date of publication and mention of the grant of the patent: **01.06.2005**
(21) Application number: 00966171.1
(22) Date of filing: 28.09.2000
(51) Int. Cl.: A43B 13/32, A43D 25/20, A43D 37/00, C08J 7/12, C09J 5/02

(54) **APPARATUS AND PROCESS FOR TREATING SHOE SOLES THROUGH ULTRAVIOLET RADIATION AND OZONE**
VORRICHTUNG UND VERFAHREN ZUR BEHANDLUNG VON SCHUHSOHLEN MIT ULTRAVIOLETTER STRAHLUNG UND OZON
APPAREIL ET PROCEDE DE TRAITEMENT DE SEMELLES DE CHAUSSURES PAR RAYONNEMENT ULTRAVIOLET ET OZONE

(30) Priority: 30.09.1999 ES 9902157
(43) Date of publication of application: 28.08.2002
(73) Proprietor: Viatecnia Sociedad Limitada, 03004 Alicante (ES)
(72) Inventor: BEAUS NAVARRO, José, Luis, E-03004 Alicante (ES); ROMERO SANCHEZ, Maria, Dolores, E-03004 Alicante (ES); MARTIN MARTINEZ, José, Miguel, E-03004 Alicante (ES); PASTOR BLAS, Maria, Mercedes, E-03004 Alicante (ES)
(74) Representative: Gil-Vega, Victor
(86) International application number: PCT/ES2000/000365
(87) International publication number: WO 2001/022844

(56) References cited:
- WO-A-98/05704
- DE-A- 3 631 123
- IT-B- 1 236 249
- DATABASE WPI Week 200019, Derwent Publications Ltd., London, GB; AN 2000-215631, XP002951409 & JP 2000 041701 A (USHIO INC.) 15 February 2000

## Description

### OBJECT OF THE INVENTION

This invention covers a process and an apparatus for the treatment of footwear soles using high energy ultraviolet radiation combined with ozone.

With this process and apparatus, physical and chemical adhesion properties are improved on the surfaces of materials used in the manufacture of soles, such as synthetic vulcanised and non vulcanised rubbers, thermoplastic rubbers, ethylene mixed polymers and vinyl acetate (EVA), polyurethane foams, etc..) as used in the footwear industry.

### BACKGROUND OF THE INVENTION

In the footwear sector, synthetic rubbers and polymers (for example, EVA mixed polymers, polyurethane foams) are widely used in the manufacture of soles. However, the majority of these materials have low surface energies (below 30 mJ/m²), which necessitates the undertaking of a surface treatment when joining to the uppers by means of an adhesive (generally polyurethane or polychloroprene). In addition to this, different components of the rubber and polymers formulation may lead to surface energy values below 30 mJ/m², making the adhesive process even more complex.

To date, halogenation is the suface treatment most widely used in the footwear sector for the chemical modification of the surface of rubber materials due to its effectiveness, low cost and easy application. There are different methods of halogenation of vulcanised synthetic rubbers. All of them are based on the use of solutions of a halogenating agent in an organic solvent, or on the action of chlorine or bromine vapours. Trichloroisocyanuric acid (TCI) - 1,3,5-trichloro- 1,3,5, -triacin ― 2,4 6, trione - is currently the most widely used halogenating agent in the footwear sector, and is applied dissolved in a ketone or ester type organic solvent.

Halogenation is performed by applying the halogenating solution with a brush onto the sole. After 20 to 45 minutes has elapsed the adhesive in solution is applied. This adhesive is also applied with a brush. After 30 minutes the dry film of the adhesive is reactivated and joins the material to the upper.

However, the said treatment of the surfaces using halogenation has major limitations:
- Potential toxicity of halogenating solution owing to chlorine vapour emanations during handling and application of the halogenating agent, as well as the vapours of the organic solvents used, with the resulting environmental damage as well as the hazard for workers.
- Halogenating agents have very limited stability, and have therefore to be prepared immediately before use.
- The concentration of the halogenating agent is critical, as any excess may lead to loss of adhesion due to degradation of the surface and the deposition of reaction by-products of the halogenating agent over the surface.
- Treatment requires relatively long periods of time (around 6 hours) to achieve optimum performance.

On the other hand, German patent DE-3631123 refers to the treatment of surfaces prior to joining them using adhesives based on the action of ultraviolet radiation at a wavelength of from 200 to 400 nm, particularly from 230 to 270 nm and most particularly centred around the mercury line of the UV spectrum at 253.7 nm. This prior treatment induces structural modifications on the surfaces of rubber treated in this way, fundamentally in aspects strictly associated with its physical properties, given that the generation of ozone using ultraviolet radiation centred around the mercury line of 253.17 nm (HPI-T lamps as mentioned in the report of the said patent) is minimal. In the procedure described therein a determining factor is the prior treatment of the materials using organic solvents at moderately high temperatures, particularly benzene, as stated in claims 2 and 3, to increase the effects of physical adhesion, with the above-mentioned negative effects on the environment and the safety of workers.

### DESCRIPTION OF THE INVENTION

Amongst others, the procedure and apparatus used in this invention provides the following technological advantages in comparison with the process known in the state of the art:
- The surface treatment time is shortened from around one hour to a few minutes.
- No chemical residues are produced, nor are organic solvents used, leading to an increase in safety for the environment and workers.
- Excellent adhesive joints are obtained with many of the sole materials used in the footwear industry.
- It is a versatile surface treatment, which may be used easily in a continuous or discontinuous production system. It may therefore be included in an automated production line.
- There is a notable improvement in the quality of the finished footwear
- The adhesive may be applied immediately after the completion of treatment, without the need for waiting times in the productive process.

### DETAILED DESCRIPTION OF THE INVENTION

The process, combined with the apparatus, consists of applying UV radiation with a wavelength of between 130 nm and 185 nm with high power per unit of area (at least 20 mW/cm²) on a footwear sole, using an appropriate discharge lamp with or without a reflector, for a variable time of between several seconds and several minutes. The sole may be composed of synthetic rubber, vulcanised or not, an EVA copolymer, whether or not foamed or expanded, an open or closed pore polyurethane foam, of any density, or any other sole material used in the manufacture of any type of footwear.

The process, combined with the apparatus, is applied using a lamp located inside a closed chamber, into which the sole to be treated is placed. The distance between the sole and the lamp is variable, using any type of device to raise or lower the sole and/or the lamp.

The chamber has a continuous air inlet which, when in contact with the UV lamp, continuously generates ozone, which is the chief agent for chemically activating the surface of the sole material, this being essential for a suitable level of efficacy of the treatment. The air flow is continuously removed from the chamber to avoid undesirable concentrations of ozone in contact with the sole and/or metallic parts of the chamber.

The sole is placed in the chamber using a continuous system (such as a conveyor belt) or a discontinuous one. Moreover, once the sole has been treated, it is removed from the chamber using a continuous or discontinuous system.

The polyurethane adhesive or any other used in the manufacture of footwear, may be applied to the sole using any process (brush, gum, curtain, roller or any other) immediately after treatment or after any amount of time (from minutes to months) after the completion of treatment.

Once the adhesive has been applied the join is made to any material used in footwear manufacture, such as fabric, leather, synthetic leather or any other material) using any known process not covered by this invention.

### BRIEF DESCRIPTION OF THE DRAWINGS

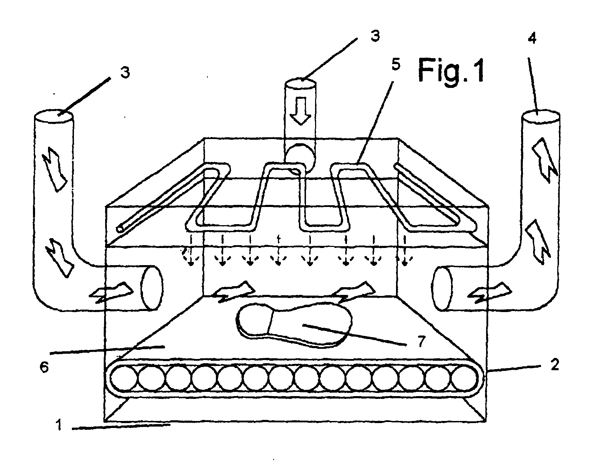

Figure 1 is a perspective view of an example of the apparatus for the application of the process covered by the invention.

### EXAMPLE

The process for the treatment of footwear soles is applied in the apparatus (1) which is composed of a chamber (2), which is prismatic in shape.

In one of the sides of the chamber there are one or several forced air inlets (3), while in the other sides there is at least one forced air outlet (4). The said forced air flow may be continuous or discontinuous.

On the inside of the chamber there is a high energy UV lamp in a suitable position (5), while in front of the said lamp there is a conveyor belt (6) on which the surface area of the sole to be treated is placed.

The chamber has an access for inserting the sole and placing it on the said conveyor belt and an outlet opposite this through which the sole leaves once it has been treated.

The distance between the lamp and the sole is variable, which means that it uses any type of device for the convenient adjustment of this distance and fix the element that has been moved in place, whether this be the lamp or the conveyor belt.

## Claims

1. Procedure for the treatment of footwear soles by means of the application of high energy ultraviolet radiation combined with ozone; particularly for improving the adhesion of soles to different adhesives, **characterized by** the fact that the ultraviolet radiation used has a wavelength of from 130 nm to 185 nm

2. Apparatus for the execution of the procedure described in claim 1, **characterised by** the fact that it includes a chamber (2) equipped with a system for the forced circulation of air, and in which there is a high energy UV lamp (5) and a conveyor belt (6).

3. Apparatus according to claim 2, **characterised by** the fact that the distance between the high energy UV lamp (5) and the conveyor belt (6) is adjustable.

4. Apparatus according to either claim 2 and/or 3, **characterised by** the fact that the system for the forced circulation of air, makes possible to control its flow.

## Patentansprüche

1. Verfahren zur Behandlung von Schuhsolen mittels Anwendung von Hochenergie ultravioletter Strahlung in Verbindung mit Ozon, insbesondere zur Verbesserung der Haftfähigkeit von Sohlen bei Anwendung verschiedener Klebstoffe und **dadurch gekennzeichnet dass** die angewandte ultraviolette Strahlung eine Wellenlänge von 130 nm bis 185 nm hat.

2. Gerät zur Ausführung des im Patentanspruch 1 beschriebenen Verfahrens, **dadurch gekennzeichnet, dass** dieses Gerät eine Kammer (2) enthält, die mit einem System zum Zwangsluftumlaufs ausgestattet ist, und in der sich eine Hochenergie UV Lampe (5) und ein Förderband (6) befinden.

3. Gerät gemäss Anspruch 2 **dadurch gekennzeichnet, dass** die Entfernung zwischen der UV Lampe (5) und dem Förderband (6) regulierbar ist..

4. Gerät gemäss Anspruch 2 und/oder 3 **dadurch gekennzeichnet dass** das System zum Zwangsluftumlauf es möglich macht dessen Strömung zu regulieren.

## Revendications

1. Procédé pour le traitement des semelles de chaussures au moyen de radiation ultra-violette à haute énergie combinée avec de l'ozone ; spécialement pour améliorer l'adhésion des semelles à différents adhésifs, **caractérisé en ce que** la radiation ultra-violette utilisée a une longueur d'onde comprise entre 130 nm et 185 nm.

2. Appareil pour l'exécution du produit décrit dans la revendication 1, **caractérisé en ce qu'**il inclut une chambre (2) équipée d'un système pour la circulation forcée de l'air, et dans lequel il existe une lampe (5) à rayon UV à haute énergie et un tapis roulant (6).

3. Appareil selon la revendication 2, **caractérisé en ce que** la distance entre la lampe (5) à rayon UV à haute énergie et le tapis roulant (6) est ajustable.

4. Appareil selon l'une quelconque des revendications 2 et/ou 3, **caractérisé en ce que** le système pour la circulation forcée de l'air, rend possible de contrôler son flux.
